(19) Europäisches Patentamt
European Patent Office
Office européen des brevets

(11) Numéro de publication: **0 376 792 A2**

(12) **DEMANDE DE BREVET EUROPEEN**

(21) Numéro de dépôt: **89403514.6**

(51) Int. Cl.5: **C08G 8/00, //B27N3/00**

(22) Date de dépôt: **15.12.89**

(30) Priorité: **29.12.88 FR 8817413**

(43) Date de publication de la demande:
**04.07.90 Bulletin 90/27**

(84) Etats contractants désignés:
**AT BE CH DE ES GB GR IT LI LU NL SE**

(71) Demandeur: **Clavier, Philippe**
**27 Avenue de St-Germain**
**F-78160 Marly le Roi(FR)**

(72) Inventeur: **Clavier, Philippe**
**27 Avenue de St-Germain**
**F-78160 Marly le Roi(FR)**

(74) Mandataire: **Bouju, André**
**Cabinet Bouju 38 avenue de la Grande Armée**
**F-75017 Paris(FR)**

(54) **Procédé pour la fabrication de résines thermodurcissables résistant à l'eau bouillante et résines obtenues.**

(57) Le procédé permet d'obtenir des résines thermodurcissables résistant à l'eau bouillante.

On fait réagir un corps chimique ou un composé renfermant un corps chimique comportant au moins deux fonctions méthylol par molécule, avec un composé chimique ayant au moins deux fonctions hydrogène par molécule, de façon à créer des ponts de polymérisation du type :

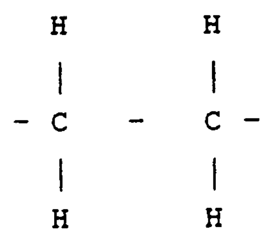

Utilisation notamment pour la fabrication du bois contreplaqué ou aggloméré.

EP 0 376 792 A2

# Procédé pour la fabrication de résines thermodurcissables résistant à l'eau bouillante et résines obtenues

La présente invention concerne un procédé pour la fabrication de résines thermodurcissables par réaction entre des composés organiques comportant au moins deux fonctions méthylols et d'autres composés organiques comportant au moins deux fonctions pouvant estérifier de telles fonctions méthylols.

L'invention vise également des résines thermodurcissables obtenues notamment selon le procédé précité.

Les résines thermodurcissables les plus connues actuellement sont les résines urée-formaldéhyde (formol) et les résines phénol-formaldéhyde.

Ces résines sont obtenues par réaction entre un composé ayant au moins une fonction aldéhyde (formaldéhyde) et un composé ayant au moins une fonction hydrogène (urée ou phénol).

Ces résines sont couramment utilisées dans la fabrication du bois contreplaqué et du bois aggloméré constitué de fibres ou de sciure de bois agglomérées par une résine du genre précité.

La résine urée formaldéhyde ne résiste pas à l'eau. De ce fait, elle ne convient pas pour les matériaux devant résister à l'eau. La résine phénol formaldéhyde résiste à l'eau mais est plus chère que la précédente.

Il a été constaté récemment que les vapeurs de formaldéhyde étaient cancérigènes. Or, les résines à base de formaldéhyde ne sont jamais complètement polymérisées, de sorte que celles-ci exhalent toujours une vapeur de formaldéhyde présentant des risques de cancer.

On cherche ainsi actuellement des résines pouvant remplacer les résines urée et phénolformaldéhyde précitées et ne présentant pas la nocivité de ces dernières. Toutefois, les résines actuellement connues qui pourraient convenir sont beaucoup plus onéreuses que celles ci-dessus.

Le but de la présente invention est ainsi de proposer un procédé qui permette de fabriquer des résines qui puissent remplacer les résines formaldéhyde connues et qui présentent des propriétés au moins aussi intéressantes que ces dernières tout en étant avantageuses sur le plan économique.

Dans le brevet français n° 87 18035 du 23 décembre 1987, le présent déposant a déjà répondu à ce but en remplaçant le formol par des corps comportant des fonctions aldéhydes et, en particulier des sucres dits primaires comme le glucose ou le galactose. Selon le brevet français précité, ces sucres sont de préférence extraits de déchets agricoles, en particulier du petit lait, notamment celui provenant de la fabrication des fromages.

Ce petit lait renferme suivant son origine, entre 5 et 13% en poids de matières solides constituées essentiellement par du lactose, des protéines et des sels minéraux.

Ce petit lait n'a actuellement qu'une valeur économique faible, par exemple en porcherie. Ce petit lait est en tout cas produit en une quantité supérieure à sa demande. De plus, il ne peut être jeté, car il est considéré comme un polluant puisqu'il désoxygène l'eau.

Grâce à l'invention précitée, ce petit lait trouve une valeur économique intéressante dans la mesure où il peut servir de base pour la fabrication de résines comparables aux résines urée formaldéhyde et phénolformaldéhyde connues.

En effet, le lactose contenu dans ce petit lait est transformé après hydrolyse en glucose et galactose qui présente une fonction aldéhyde et qui peut ainsi réagir avec un composé organique ayant une fonction hydrogène, comme par exemple l'urée et le phénol, pour produire une résine thermodurcissable n'ayant aucune nocivité.

Malheureusement, les collages obtenus à partir de ces résines restent relativement fragiles sous l'action de l'eau bouillante.

La présente invention remédie à cette difficulté tout en utilisant des déchets agricoles adéquats. Elle a aussi l'avantage d'éviter l'hydrolyse de tels déchets qui est un procédé relativement coûteux.

Les déchets agricoles utilisés dans l'invention doivent comporter suffisamment de corps chimiques dont les molécules comprennent au moins deux fonctions méthylols. De tels corps chimiques sont par exemple les sucres composés comme le lactose, le maltose, le saccharose mais aussi par exemple la cellulose ou l'amidon.

Il est à remarquer que ces corps chimiques forment en eux-mêmes des ponts entre leurs fonctions méthylols, ponts qui seraient détruits par hydrolyse. On peut, au contraire, maintenir les ponts tout en créant de nouveaux ponts entre fonctions méthylols provenant de différentes molécules de ces corps chimiques. Il faut, pour cela, mélanger avec les corps chimiques précités des corps dont les molécules présentent au moins deux fonctions qui peuvent réagir avec les fonctions méthylols des corps chimiques précités.

Il est à remarquer que les fonctions méthylols des corps chimiques précités sont peu actives. Par exemple, elles ne se combinent pas entre elles pour former des ponts de polymérisation du type :

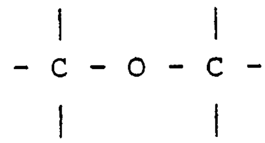

Suivant l'invention, on fait réagir un corps chimique ou un composé renfermant un corps chimique comportant au moins deux fonctions méthylols par molécule avec un composé chimique ayant au moins deux fonctions hydrogène par molécule, de façon à créer des ponts de polymérisation du type :

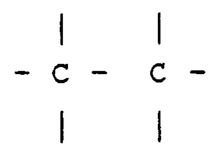

Les essais ont montré que les résines obtenues et présentant de tels ponts de polymérisation résistaient à l'eau bouillante.

Cette performance peut s'expliquer par le fait que l'énergie de liaison des ponts

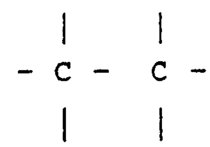

est égale à 18 Kcal/mole. Cette valeur est nettement supérieure à l'énergie de vaporisation de l'eau qui est égale à 9 Kcal/mole.

Par contre, les ponts de polymérisation,

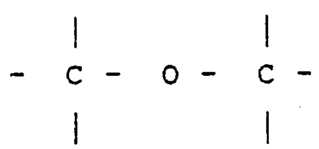

ou

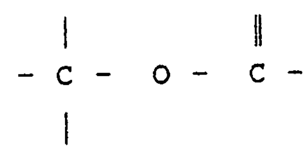

des résines obtenues par d'autres procédés ont une énergie de liaison, comparable à l'énergie de vaporisation de l'eau, ce qui explique leur médiocre résistance à l'eau bouillante.

Le choix des corps utilisables se restreint davantage compte tenu des deux conditions suivantes :

A/ stabilité à la chaleur jusqu'à la température maximale utilisée dans la presse pendant la polymérisation (125°C pour le contreplaqué, 175°C pour les agglomérés). Cette condition élimine, par exemple, les acides oxalique et malonique ;

B/ insolubilité à l'eau : l'expérience montre, en effet, que les corps utilisables qui sont insolubles à l'eau produisent des collages beaucoup plus résistants à l'eau bouillante. Mais ceci est une préférence, non une nécessité.

Il y a lieu également de prendre en considération l'encombrement stérique, c'est-à-dire le nombre de ponts créables par volume de résine.

Les déchets agricoles sus-nommés utilisables dans le procédé selon l'invention sont, en particulier, le petit lait provenant des fromageries, l'amidon de maïs qui est produit en excès et les déchets cellulosiques quelconques.

Dans le procédé selon l'invention, on peut dans une première étape, concentrer le déchet agricole pour

obtenir une densité utile du corps présentant au moins deux fonctions méthylols par molécule.

Le lactosérum des fromageries, qui contient naturellement environ 5% d'extrait sec, peut, par exemple, être concentré par évaporation sous vide jusqu'à contenir par exemple 48% d'extrait sec.

On mélange alors le concentré obtenu avec une quantité adéquate du corps comportant au moins deux fonctions hydrogène par molécule. Comme ce corps est préférablement insoluble, le mélange doit se faire en ajoutant celui-ci par très petites quantités à chaque fois et en brassant continuellement. La température ambiante est généralement suffisante mais on peut préférer une température un peu plus élevée si celle-ci permet d'obtenir un meilleur mélange.

A la fin de cette étape, la résine est prête pour son utilisation.

Une résine ainsi obtenue a un pH généralement acide (par exemple égal à 4) qui est acceptable lorsque la résine est utilisée au contact avec des vernis. On peut toutefois modifier ce pH en une valeur plus acide ou plus basique en ajoutant un acide ou une base concentrée qui servent de catalyseurs à la polymérisation. En particulier, l'acide lactique est un catalyseur efficace.

La résine, ainsi obtenue, peut être utilisée exactement de la même façon que les résines, par exemple, phénoliques actuelles.

On va décrire ci-après, à titre d'exemple non limitatif, la mise en oeuvre de l'invention à partir du petit lait provenant du lait de vache.

Le petit lait a la composition pondérale suivante :

| | |
|---|---|
| protéines : | 9,88% |
| graisses : | 3,44% |
| lactose : | 59,38% |
| cendres : | 6,12% |
| acide lactique : | 15,49% |
| calcium : | 2, 27% |
| sodium : | 0,44% |
| chlorures : | 1,28% |
| phosphore : | 1,20% |

Ce petit lait a un pH qui est généralement compris entre 4,2 et 5,8 suivant qu'il provient de la fabrication de fromages moux, durs ou maigres.

Ce petit lait est directement utilisable pour la mise en oeuvre du procédé selon l'invention.

Il y a toutefois intérêt à séparer les protéines du petit lait, ce qui est réalisé par ultrafiltration. On obtient ainsi une solution aqueuse renfermant une matière sèche ayant approximativement la composition pondérale suivante :

| | |
|---|---|
| lactose : | 80% |
| cendres : | < 16% |
| graisses : | < 0,5% |
| protéines : | 2 à 4% |
| sels minéraux : | < 4% |

Avant d'employer le lactosérum, il est concentré par évaporation sous vide jusqu'à contenir 48% d'extrait sec.

Dans un réacteur chimique, à température ambiante, on verse le lactosérum concentré. Pendant toute l'opération, le mélange doit être brassé continuellement à, par exemple, 400 tours par minute. De bons résultats ont aussi été obtenus, néanmoins, en agitant à 100 ou 200 tours par minute.

On ajoute alors de l'acide lactique comme catalyseur futur de la polymérisation.

On verse, alors, très lentement dans le réacteur, du phénol. Cette opération de versement peut prendre une heure.

En fin de versement, le rapport molaire entre le lactose et le phénol doit être équimoléculaire bien qu'un léger excédent de phénol puisse être préféré.

Si l'on continue à brasser le mélange, à une température de 30 °C, le pH et la viscosité évoluent.

Le pH, qui peut être de 3,65 en fin d'ajout de l'acide lactique, changera lentement puis plus rapidement

pour atteindre à peu près la valeur 4. La viscosité qui part d'à peu près 110 centipoises passera à 300 centipoises puis continuera, si rien n'est arrêté, jusqu'à des viscosités très pâteuses.

En fait, on arrête l'opération avant d'avoir atteint la viscosité désirée (qui est généralement connue à une température de 20° C) pour tenir compte du fait que la viscosité continue d'évoluer pendant que la résine refroidit.

La viscosité à laquelle on s'arrête de chauffer est déterminée expérimentalement. Comme, d'ailleurs, la viscosité à 60° C est beaucoup moins forte que celle du mélange ramené à 20° C, le meilleur contrôle est obtenu en décidant d'une durée d'opération.

Le mélange tout entier forme la résine. Il n'y a pas de sous-produit.

Les résines obtenues conformément à l'invention remplacent avantageusement les résines formaldéhydes dans la fabrication entre autres des panneaux de bois contreplaqué ou en aggloméré ou dans la fabrication des laminés décoratifs à base de papier kraft.

Lors de cette fabrication, on mélange la résine avec de la sciure ou de la fibre de bois pour réaliser du bois aggloméré ou on applique cette résine sur des plaques de bois pour réaliser du contre-plaqué.

On soumet les panneaux obtenus à l'action d'une presse chauffante pour polymériser la résine. Cette polymérisation n'est jamais complète. On l'arrête lorsqu'elle est jugée suffisante.

Le procédé est sensiblement le même dans le cas des laminés décoratifs.

Dans ce cas, on enduit la résine sur des feuilles de papier kraft que l'on empile les unes sur les autres dans une presse.

Le choix de la viscosité de la résine avant son introduction dans la presse est déterminé par deux considérations : la viscosité nécessaire pour appliquer la résine, le temps de passage en presse.

Il est en plus souvent utile d'ajouter à la résine un petit pourcentage (1% par exemple) d'amidon soluble pour faciliter le mouillage.

Ces résines, bien qu'en général acides, ne déplacent pas le gaz carbonique de la craie qui peut être employée comme charge.

Les cycles de presse doivent répondre aux deux critères suivants :

Jamais la résine ne doit se trouver à une pression à laquelle l'eau bout. A la température à laquelle est portée la résine, si cette précaution n'est pas prise, l'eau incluse dans la résine se met à bouillir et fait éclater la pièce à coller. Toutefois, quand la résine est prise, on peut faire chuter la pression brutalement, pourvu que des quantités de résine adéquates aient été utilisées.

Les cycles de presse peuvent être identiques aux cycles employés dans le cas des résines phénol-formol ordinaires.

Les résines obtenues selon le procédé conforme à l'invention présentent des résistances à la rupture au moins égales à des résines à base de formaldéhyde. De plus, les résines obtenues selon l'invention, ne présentent pas de risque d'émanation de vapeurs nocives telles que le formaldéhyde ou le phénol pendant l'emploi ou la fabrication ou l'usage du produit fini dans lequel elles apparaissent.

Les objets collés avec les résines selon l'invention résistent à l'eau bouillante (par exemple pendant une durée d'essai de 78 heures) pourvu que l'on utilise une proportion suffisante de résine (par exemple 400 g par $m^2$ dans le cas d'un contreplaqué) et que l'application de cette résine soit suffisamment soignée (ce qui est le cas dans l'industrie).

Bien entendu, l'invention n'est pas limitée aux exemples de réalisation que l'on vient de décrire et on peut apporter à ceux-ci de nombreuses modifications sans sortir du cadre de l'invention.

Ainsi, l'invention vise la fabrication de résines thermodurcissables à partir de tout déchet agricole ou autre composé renfermant un corps chimique comportant au moins deux fonctions méthylols par molécule pouvant réagir sur un composé ayant au moins deux fonctions hydrogène par molécule.

## Revendications

1. Procédé de fabrication de résines thermodurcissables, caractérisé en ce qu'on fait réagir un corps chimique ou un composé renfermant un corps chimique comportant au moins deux fonctions méthylols par molécule, avec un composé chimique ayant au moins deux fonctions hydrogène par molécule, de façon à créer des ponts de polymérisation du type :

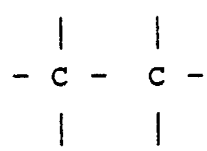

2. Procédé conforme à la revendication 1, caractérisé en ce que le composé renfermant un corps chimique ayant au moins deux fonctions méthylol est un déchet agricole tel que le petit lait ou de l'amidon de maïs.

3. Procédé conforme à l'une des revendications 1 ou 2, caractérisé en ce que le corps chimique ayant au moins deux fonctions hydrogène est du phénol.

4. Procédé conforme à l'une des revendications 1 à 3, caractérisé en ce que le corps chimique ayant au moins deux fonctions hydrogène est stable jusqu'à la température maximale de polymérisation mise en oeuvre lors de l'utilisation de la résine.

5. Procédé conforme à l'une des revendications 1 à 4, caractérisé en ce que la réaction est effectuée à la température ambiante en brassant continuellement les deux réactifs.

6. Procédé conforme à l'une des revendications 1 à 5, caractérisé en ce qu'on ajoute au milieu réactionnel de l'acide lactique en tant que catalyseur.

7. Résines thermodurcissables comportant des ponts de polymérisation du type :

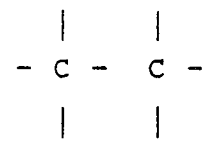

obtenues par réaction entre un corps chimique ou un composé renfermant un corps chimique ayant au moins deux fonctions méthylol par molécule et un composé chimique ayant au moins deux fonctions hydrogène par molécule.